# EUROPÄISCHE PATENTSCHRIFT

(11) **EP 1 008 289 B1**
(45) Veröffentlichungstag und Bekanntmachung des Hinweises auf die Patenterteilung: **13.04.2005**
(21) Anmeldenummer: 99124170.4
(22) Anmeldetag: 03.12.1999
(51) Int. Cl.: A01D 34/412

(54) **Messerschnellwechseleinrichtung für Mähwerke**
Device for the rapid change of mowerblades
Dispositif pour l'échange rapide de lames faucheuses

(30) Priorität: 09.12.1998 DE 19856746
(43) Veröffentlichungstag der Anmeldung: 14.06.2000
(73) Patentinhaber: CLAAS Saulgau GmbH, 88340 Bad Saulgau (DE)
(72) Erfinder: Ober, Martin, 78736 Epfendorf (DE)

(56) Entgegenhaltungen:
- EP-A- 0 717 921
- EP-A- 0 809 929
- FR-A- 2 517 927
- NL-A- 8 602 608

## Beschreibung

Die Erfindung betrifft einen Hebel als Messerschnellwechselwerkzeug zur Betätigung einer Messerschnellwechseleinrichtung für Mähwerke gemäß dem Oberbegriff des Patentanspruchs 1.
Aus der europäischen Patentanmeldung EP 0 809 929 ist eine gattungsgleiche Messerschnellwechseleinrichtung für Mähwerke bekannt, deren Messerschnellwechselwerkzeug als Hebel ausgeführt ist, der einenends einen profilierten Quersteg aufweist, der so bemessen ist, daß er in dem sich ergebenden Freiraum zwischen einem Mähteller und dem mit diesem Mähteller verbundenen Messerträger eingeführt werden kann. Zur Gewährleistung einer sicheren Kraftübertragung während des Auseinanderdrückens von Mähteller und Messerträger zum Zweck des Messerwechsels fixiert ein untenseitig am Mähteller angebrachter Anschlag die Lage des Quersteges des Hebels in radialer Richtung am Mähteller. Um einen störungsfreien Messerwechsel zu gewährleisten, muß sich der am Mähteller angeordnete Anschlag bis weit hinter den messeraufnehmenden Anlenkzapfen erstrecken. Auf diese Weise verkürzt sich der Abstand zwischen dem am Anschlag fixierten Quersteg des Messerschnellwechselwerkzeugs und der Befestigungsstelle des für einen Messerwechsel auszulenkenden Messerträgers erheblich. Um die für einen störungsfreien Messerwechsel notwendige Auslenkung des Messerträgers zu erreichen, müssen bei einer derartigen Ausführung sehr hohe Kräfte aufgebracht werden, die einerseits zu verschleißfördernden Belastungen an den beim Messerwechsel in Wirkverbindung stehenden Bauteilen hervorrufen und andererseits den Messerwechsel-Ausführenden physisch stark beanspruchen.

Der Erfindung liegt deshalb die Aufgabe zugrunde, eine Messerschnellwechseleinrichtung für Mähwerke gemäß dem Oberbegriff des Anspruchs 1 so zu gestalten, daß die für einen Messerwechsel aufzubringenden Verstellkräfte zum Verschwenken des Messerträgers gering sind, so daß der Verschleiß der Messerschnellwechseleinrichtung und die physische Belastung des die Messerschnellwechseleinrichtung Betätigenden reduziert wird.
Erfindungsgemäß wird die Aufgabe durch eine Messerschnellwechseleinrichtung für Mähwerke mit den kennzeichnenden Merkmalen des Anspruchs 1 gelöst.

In vorteilhafter Weise kann ein mit einer Aussparung versehener Quersteg eines Messerschnellwechselwerkzeuges den am Mähteller angebrachten Anschlag so umgreifen, daß während des Aushebelvorganges eine Fixierung der Lage des Querstegs am Anschlag erreicht wird und durch den frontseitig am Quersteg angeordneten Auflagebereich niedrige Verstellkräfte zur Auslenkung des Messerträgers erforderlich sind. Begünstigt wird die Aufbringung niedriger Verstellkräfte auch dadurch, daß der Anschlag den jeweils ein Mähmesser aufnehmenden Anlenkzapfen vollständig abschirmt, so daß wenigstens ein kraftübertragender Auflagebereich seitlich an dem jeweiligen Mähmesser vorbeigeführt werden kann, wodurch sich der Hebelarm zwischen kraftübertragendem Auflagebereich und der Fixierung des Messerträgers am Mähteller deutlich verlängert.

In vorteilhafter Weiterbildung der Erfindung können durch die beidseitige Ausbildung von Auflagebereichen die je Auflagebereich zu übertragenden Kräfte weiter verringert werden.

Sind die ein- oder beidseitig der Aussparung ausgebildeten Auflagebereiche so weit in radialer Richtung des Messerträgers verlängert, daß sie mit dem frontseitigen Ende des Messerträgers in Wirkverbindung stehen, verringert sich die notwendige Verstellkraft zur Auslenkung des Messerträgers auf ein Minimum.

Vorteilhafte Ausgestaltungen sind Gegenstand weiterer Unteransprüche und werden nachfolgend anhand eines in Zeichnungen dargestellten Ausführungsbeispiels näher beschrieben.

Es zeigen
- Figur 1: eine schematische Schnittdarstellung der erfindungsgemäßen Messerschnellwechsel-Einrichtung in der Ausgangsstellung
- Figur 2: eine schematische Schnittdarstellung der erfindungsgemäßen Messerschnellwechsel-Einrichtung in ausgelenkter Stellung

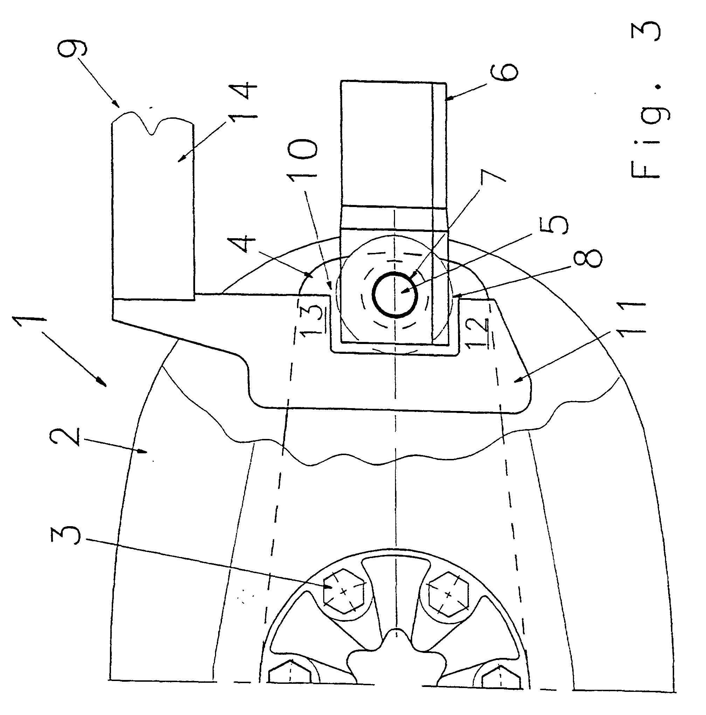

- Figur 3: eine Draufsicht auf die erfindungsgemäße Messerschnellwechsel-Einrichtung

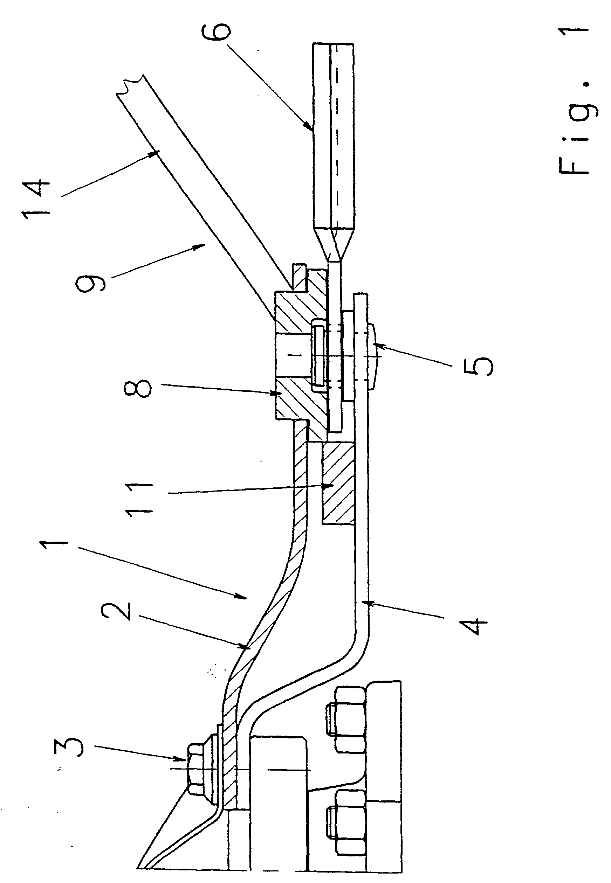

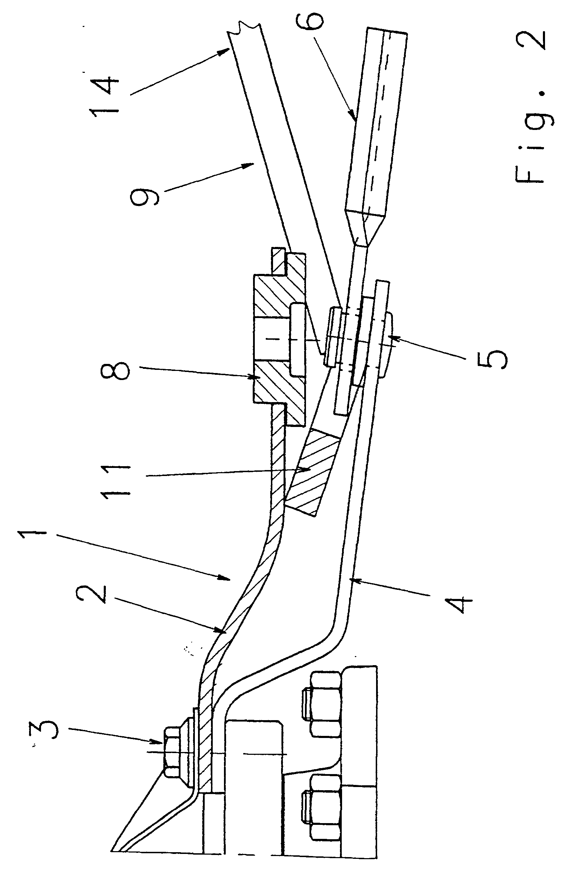

Figur 1 zeigt schematisch ein Mähorgan 1 eines nicht näher dargestellten Mähwerkes, welches wenigstens ein derartiges Mähorgan 1 umfaßt. Das Mähorgan 1 besteht im wesentlichen aus einem Mähteller 2, der über Verbindungselemente, die im einfachsten Fall Schraubverbindungen 3 sein können, mit einem ein- oder mehrteilig ausgeführten Messerträger 4 lösbar verbunden ist. Der Messerträger 4 nimmt in seinem radial außen liegenden Bereich wenigstens einen Anlenkzapfen 5 lösbar oder fest auf, der die Funktion eines Lagerbolzens für die Mähmesser 6 hat, die über eine Öffnung 7 frei drehbar mit dem Anlenkzapfen 5 verbunden sind. Jeder Mähteller 2 verfügt im Bereich des Anlenkzapfens 5 des ihm zugeordneten Messerträgers 4 über einen Anschlag 8, der im Zusammenwirken mit dem jeweiligen Anlenkzapfen 5 eine zueinander beabstandete Lage von Mähteller 2 und Messerträger 4 gewährleistet und zudem Anlenkzapfen 5 obenseitig so deckelt, daß die Bewegung des auf dem Anlenkzapfen 5 angeordneten Mähmessers 6 in vertikaler Richtung begrenzt ist. Der Anschlag 8 ist so dimensioniert, daß im Bereich des Anlenkzapfens 5 wenigstens die Breite des, auf dem Anlenkzapfen 5 angeordneten Mähmessers 6 überdeckt wird. Erfindungsgemäß ist nun ein als Hebel ausgeführtes Messerschnellwechselwerkzeug 9 vorgesehen, dessen untenseitig angeordneter, eine Ausbuchtung 10 aufweisender Quersteg 11 so zwischen Mähteller 2 und Messerträger 4 einführbar ist, daß seine Ausbuchtung 10 den untenseitig am Mähteller 2 angeordneten Anschlag 8 wenigstens teilweise umfassen kann. Die in den Quersteg 11 eingearbeitete Ausbuchtung 10 ist ein- oder wie dargestellt beidseitig von Auflagebereichen 12, 13 umgeben, die bei im Eingriff befindlichen Messerschnellwechselwerkzeug 9 in Wirkverbindung mit dem jeweiligen Messerträger 4 stehen. In vorteilhafter Weise sind der Halter 14 und der Quersteg 11 des Messerschnellwechselwerkzeugs 9 winklig zueinander angeordnet, so daß gemäß Figur 1 und 2 eine einfache Handhabung des Messerschnellwechselwerkzeugs 9 möglich wird. Im Ausgangszustand (Figur 1) umgreift die Aussparung 10 des Querstegs 11 den Anschlag 8 in Abhängigkeit von der Länge der Auflagebereiche 12, 13 teilweise oder vollständig sowie ein- oder beidseitig, wobei die Länge der Auflagebereiche 12, 13 auch so bemessen sein kann, daß wenigstens einer der Auflagebereiche 12, 13 bündig mit dem Messerträger 4 abschließt. In dieser Stellung nimmt der Halter 14 eine in vertikaler Richtung geneigte Position ein, die ein einfaches Zugreifen und Verschwenken ermöglicht. Während des Verschwenkvorganges wird der Halter 14 abwärts bewegt, wobei der Quersteg 11 im Bereich des Anschlags 8 in radialer Richtung am Mähteller 2 fixiert wird und die Auflagebereiche 12, 13 in Wirkverbindung mit dem jeweiligen Messerträger 4 stehen. Während der Abwärtsbewegung des Halters 14 richtet sicht der Quersteg 11 zwischen Mähteller 2 und Messerträger 4 auf, wobei der durch die Schraubverbindung 3 gehaltene Messerträger 4 soweit ausgelenkt wird, daß der Anlenkzapfen 5 aus dem Wirkbereich des Anschlags 8 schwenkt und das jeweilige Mähmesser 6 problemlos gewechselt werden kann. Nach erfolgtem Wechsel des Mähmessers 6 wird der Halter 14 wieder in die Position gemäß Figur 1 zurückgeschwenkt, so daß der Anlenkzapfen 5 zur Begrenzung der vertikalen Bewegung des Mähmessers 6 wieder Anschlag 8 kontaktiert. Aufgrund dessen, daß das zum Verschwenken des Messerträgers 4 notwendige Moment um die Schraubverbindung 3 durch die weit von diesen Schraubverbindungen 3 entfernten Auflagebereiche 12, 13 im Zusammenwirken mit dem jeweiligen Messerträger 4 erzeugt wird, sind am Halter 14 des Messerschnellwechselwerkzeugs 9 nur geringe Kräfte aufzubringen. Auf diese Weise wird eine verschleißmindernde geringere Belastung der während des Mähmesserwechsels in Wirkverbindung stehenden Bauteile 2 - 4 und 11 - 14 erreicht. Außerdem führt die geringere, zum Auslenken des Messerträgers 4 notwendige Kraft zu einer verminderten physischen Belastung der den Mähmesserwechsel vornehmenden Bedienperson.
Die offenbarte Messerschnellwechseleinrichtung ist nicht auf die im Ausführungsbeispiel beschriebene Scheibenmähwerksausführung beschränkt, sondern kann in gleicher Weise auch an Trommelmähwerken eingestzt werden, um die beschriebenen Effekte zu erzielen.

### Bezugszeichenliste

- 1: Mähorgan
- 2: Mähteller
- 3: Schraubverbindung
- 4: Messerträger
- 5: Anlenkzapfen
- 6: Mähmesser
- 7: Öffnung
- 8: Anschlag
- 9: Messerschnellwechselwerkzeug
- 10: Aussparung
- 11: Quersteg
- 12: Auflagebereich
- 13: Auflagebereich
- 14: Halter

## Patentansprüche

1. Hebel als Messerschnellwechselwerkzeug zur Betätigung einer Messerschnellwechseleinrichtung für Mähwerke, die wenigstens ein, aus einem Mähteller (2) und mit diesem Mähteller (2) verbundenen Messerträger (4) aufweisendes Mähorgan (1) umfassen, wobei der Messerträger (4) über wenigstens einen, ein Mähmesser (6) aufnehmenden Anlenkzapfen (5) verfügt, der in Wirkverbindung mit wenigstens einem am Mähteller (4) fixierten Anschlag (8) steht, wobei der Anlenkzapfen (5) den Mähteller (2) und den Messerträger (4) so zueinander beabstandet, daß der Quersteg (11) eines Messerschnellwechselwerkzeug (9) zwischen beiden hindurchgreifen kann,
**dadurch gekennzeichnet, dass** das als Hebel ausgeführte Messerschnellwechselwerkzeug (9) so ausgebildet ist, dass dessen untenseitig angeordneter, eine Ausbuchtung (10) aufweisender Quersteg (11) so zwischen Mähteller (2) und Messerträger (4) einführbar ist, dass seine Ausbuchtung (10) den untenseitig am Mähteller (2) angeordneten Anschlag (8) wenigstens teilweise umfassen kann.

2. Hebel als Messerschnellwechselwerkzeug zur Betätigung einer Messerschnellwechseleinrichtung für Mähwerke nach Anspruch 1,
**dadurch gekennzeichnet,**
**daß** der Anschlag (8) im Bereich des Anlenkzapfens (5) angeordnet ist und den Anlenkzapfen (5) mit dem auf ihm angeordneten Mähmesser (6) vollständig abschirmt.

3. Hebel als Messerschnellwechselwerkzeug zur Betätigung einer Messerschnellwechseleinrichtung für Mähwerke, nach einem oder mehreren der vorhergehenden Ansprüche,
**dadurch gekennzeichnet,**
**daß** die Aussparung (10) zur Aufnahme des Anschlags (8) des Mähtellers (2) beidseitig von Auflagebereichen (12, 13) umgeben ist.

4. Hebel als Messerschnellwechselwerkzeug zur Betätigung einer Messerschnellwechseleinrichtung für Mähwerke nach einem oder mehreren der vorhergehenden Ansprüche,
**dadurch gekennzeichnet,**
**daß** wenigstens ein Auflagebereich (12, 13) frontseitig so verlängert ist, daß sich eine große Tiefe der Aussparung (10) ergibt.

5. Hebel als Messerschnellwechselwerkzeug zur Betätigung einer Messerschnellwechseleinrichtung für Mähwerke nach Anspruch 4,
**dadurch gekennzeichnet,**
**daß** die Tiefe der Aussparung (10) eine vollständige Aufnahme des Anschlags (8) zuläßt.

6. Hebel als Messerschnellwechselwerkzeug zur Betätigung einer Messerschnellwechseleinrichtung für Mähwerke nach einem oder mehreren der vorhergehenden Ansprüche,
**dadurch gekennzeichnet,**
**daß** wenigstens ein Auflagebereich (12, 13) mit dem frontseitigen Ende des Messerträgers (4) in Wirkverbindung steht.

7. Hebel als Messerschnellwechselwerkzeug zur Betätigung einer Messerschnellwechseleinrichtung für Mähwerke nach einem oder mehreren der vorhergehenden Ansprüche,
**dadurch gekennzeichnet,**
**daß** der rückwärtige Bereich des Querstegs (11) des Messerschnellwechselwerkzeugs (9) mit dem Anschlag (8) in Wirkverbindung steht.

8. Hebel als Messerschnellwechselwerkzeug 9 zur Betätigung einer Messerschnellwechseleinrichtung für Mähwerke, nach einem oder mehreren der vorhergehenden Ansprüche,
**dadurch gekennzeichnet,**
**daß** der rückwärtige Bereich des Querstegs (11) des Messerschnellwechselwerkzeugs (9) mit dem Mähteller (2) in Wirkverbindung steht.

## Claims

1. A lever as a blade quick-change tool for the actuation of a blade quick-change device for mowing mechanisms which include at least one mowing member (1) comprising a mowing plate (2) and a blade carrier (4) connected to said mowing plate (2), wherein the blade carrier (4) has at least one pivot pin (5) which accommodates a mowing blade (6) and which is in operative relationship with at least one abutment (8) fixed to the mowing plate (4), wherein the pivot pin (5) spaces the mowing plate (2) and the blade carrier (4) relative to each other in such a way that the transverse leg (11) of a blade quick-change tool (9) can engage between the two, **characterised in that** the blade quick-change tool (9) which is in the form of a lever is so designed that the transverse leg (11) thereof which is arranged at the underside and which has a recess (10) can be introduced between the mowing plate (2) and the blade carrier (4) in such a way that its recess (10) can at least partially embrace the abutment (8) arranged on the mowing plate (2) at the underside.

2. A lever as a blade quick-change tool for the actuation of a blade quick-change device for mowing mechanisms according to claim 1 **characterised in that** the abutment (8) is arranged in the region of the pivot pin (5) and completely shields the pivot pin (5) with the mowing blade (6) arranged thereon.

3. A lever as a blade quick-change tool for the actuation of a blade quick-change device for mowing mechanisms according to one or more of the preceding claims **characterised in that** the recess (10) for receiving the abutment (8) of the mowing plate (2) is surrounded on both sides by contact regions (12, 13).

4. A lever as a blade quick-change tool for the actuation of a blade quick-change device for mowing mechanisms according to one or more of the preceding claims **characterised in that** at least one contact region (12, 13) is so prolonged at the front side as to afford a great depth for the recess (10).

5. A lever as a blade quick-change tool for the actuation of a blade quick-change device for mowing mechanisms according to claim 4 **characterised in that** the depth of the recess (10) allows the abutment (8) to be completely received.

6. A lever as a blade quick-change tool for the actuation of a blade quick-change device for mowing mechanisms according to one or more of the preceding claims **characterised in that** at least one contact region (12, 13) is in operative relationship with the end at the front side of the blade carrier (4).

7. A lever as a blade quick-change tool for the actuation of a blade quick-change device for mowing mechanisms according to one or more of the preceding claims **characterised in that** the rearward region of the transverse leg (11) of the blade quick-change tool (9) is in operative relationship with the abutment (8).

8. A lever as a blade quick-change tool 9 for the actuation of a blade quick-change device for mowing mechanisms according to one or more of the preceding claims **characterised in that** the rearward region of the transverse leg (11) of the blade quick-change tool (9) is in operative relationship with the mowing plate (2).

## Revendications

1. Levier formant outil pour le changement rapide de lame pour l'actionnement d'un dispositif de changement rapide de lame de faucheuses comprenant au moins un organe de fauchage (1) formé d'un plateau faucheur (2) et d'un porte-lame (4) lié audit plateau faucheur (2), le porte-lame (4) disposant d'au moins un axe d'articulation (5) sur lequel est montée une lame de faucheuse (6) qui coopère avec au moins une butée (8) fixée au plateau faucheur (2), l'axe d'articulation (5) maintenant le plateau faucheur (2) et le porte-lame (4) à une distance l'un de l'autre qui permet le passage du bras transversal (11) d'un outil de changement rapide de lame (9), **caractérisé par le fait que** l'outil de changement rapide de lame (9) est conformé de telle sorte que son bras transversal (11) qui est tourné vers le bas et comporte une échancrure (10) puisse s'engager entre le plateau faucheur (2) et le porte-lame (4) d'une manière telle que l'échancrure (10) entoure au moins partiellement la butée (8) disposée côté inférieur sur le plateau faucheur (2).

2. Levier formant outil pour le changement rapide de lame pour l'actionnement d'un dispositif de changement rapide de lame de faucheuse selon la revendication 1, **caractérisé par le fait que** la butée (8) est disposée dans la région de l'axe d'articulation (5) et protège intégralement l'axe d'articulation (5) avec la lame de faucheuse (6) montée sur celui-ci.

3. Levier formant outil pour le changement rapide de lame pour l'actionnement d'un dispositif de changement rapide de lame de faucheuse selon une ou plusieurs des revendications précédentes, **caractérisé par le fait que** l'échancrure (10) qui reçoit la butée (8) du plateau faucheur (2) est entourée des deux côtés par des parties d'appui (12, 13).

4. Levier formant outil pour le changement rapide de lame pour l'actionnement d'un dispositif de changement rapide de lame de faucheuse selon une ou plusieurs des revendications précédentes, **caractérisé par le fait qu'**au moins une des parties d'appui (12, 13) est prolongée côté frontal donnant ainsi une grande profondeur à l'échancrure (10).

5. Levier formant outil pour le changement rapide de lame pour l'actionnement d'un dispositif de changement rapide de lame de faucheuse selon la revendication 4, **caractérisé par le fait que** la profondeur de l'échancrure (10) permet de recevoir en totalité la butée (8).

6. Levier formant outil pour le changement rapide de lame pour l'actionnement d'un dispositif de changement rapide de lame de faucheuse selon une ou plusieurs des revendications précédentes, **caractérisé par le fait qu'**au moins une partie d'appui (12, 13) coopère avec l'extrémité côté frontal du porte-lame (4).

7. Levier formant outil pour le changement rapide de lame pour l'actionnement d'un dispositif de changement rapide de lame de faucheuse selon une ou plusieurs des revendications précédentes, **caractérisé par le fait que** la zone arrière du bras transversal (11) de l'outil de changement rapide de lame (9) coopère avec la butée (8).

8. Levier formant outil pour le changement rapide de lame pour l'actionnement d'un dispositif de changement rapide de lame de faucheuse selon une ou plusieurs des revendications précédentes, **caractérisé par le fait que** la zone arrière du bras transversal (11) de l'outil de changement rapide de lame (9) coopère avec le plateau faucheur (2).
